# EUROPEAN PATENT SPECIFICATION

(11) **EP 3 169 731 B1**
(45) Date of publication and mention of the grant of the patent: **13.12.2023**
(21) Application number: 14897462.9
(22) Date of filing: 16.07.2014
(51) Int. Cl.: C08L 95/00, C08L 23/06, C08L 53/02, C08K 3/34, C08L 17/00, D06N 5/00

(54) **ASPHALT COATINGS FOR ROOFING WATERPROOF MEMBRANES, WATERPROOF MEMBRANES INCLUDING THE ASPHALT COATINGS AND METHODS FOR MAKING THE ASPHALT COATINGS**
ASPHALTBESCHICHTUNGEN FÜR EINE WASSERDICHTE DACHBAHNEN, WASSERDICHTE BAHNEN MIT ASPHALTBESCHICHTUNGEN UND VERFAHREN ZUR HERSTELLUNG DER ASPHALTBESCHICHTUNGEN
REVÊTEMENTS D'ASPHALTE POUR MEMBRANES DE TOITURE ÉTANCHES À L'EAU, MEMBRANES ÉTANCHES À L'EAU COMPRENANT LES REVÊTEMENTS D'ASPHALTE ET PROCÉDÉS DE FABRICATION DES REVÊTEMENTS D'ASPHALTE

(43) Date of publication of application: 24.05.2017
(73) Proprietor: Honeywell International Inc., Morris Plains, NJ 07950 (US)
(72) Inventor: YUAN, Ruixing, Shanghai 201203 (CN); LI, Jun, Shanghai 201203 (CN); SHEN, Sean, Shanghai 201203 (CN)
(74) Representative: Stepney, Gregory John
(86) International application number: PCT/CN2014/082320
(87) International publication number: WO 2016/008115

(56) References cited:
- WO-A1-2011/025554
- WO-A2-2011/112569
- CN-A- 102 409 812
- JP-A- 2002 121 388
- US-A1- 2007 254 989
- US-A1- 2014 069 297
- US-B2- 8 198 350

## Description

### TECHNICAL FIELD

The technical field relates generally to asphalt coatings and methods for making asphalt coatings. More particularly, the technical field relates to asphalt coatings for asphalt-based roofing waterproof membranes, waterproof membranes including such asphalt coatings, and methods for making the asphalt coatings.

### BACKGROUND

Asphalt, or bitumen, is commonly collected or synthesized and refined for use in paving and roofing applications. The type of asphalt suitable for paving applications is commonly referred to as "paving grade asphalt," or "paving asphalt." Asphalt suitable for roofing applications is commonly referred to as "roofing flux," "flux asphalt," or simply "flux." Along with roofing shingles and rolled roofing asphalt, flux asphalt is used in the manufacture of waterproof membranes useful for roofing applications.

An asphalt reinforced waterproof membrane consists of asphalt coating, a substrate, and isolation material. The substrate provides the mechanical skeleton which improves the strength and tenacity of the membrane, and the asphalt coating is dip-coated onto the substrate to improve temperature sensitivity, weather resistance, and long term aging performance, among other properties. The isolation material is required to prevent the asphalt coated membrane from adhering to itself when it is rolled during manufacture, and then while stored and transported in that rolled condition.

The strength and durability of a waterproof membrane depends on various factors including the properties of the materials used and the environmental conditions to which the membrane is exposed over its useful life. Various properties and characteristics are known to effect the performance of waterproof membranes including, for example, heat resistance, low temperature flexibility, long term aging resistance, oil staining resistance, granule adhesion, and viscosity, to name a few. Materials often are added to asphalt coatings to improve their performance with regard to one or more such characteristics. For example, high temperature performance additives, e.g., plastomers and/or elastomers, and/or low temperature performance additives, e.g., process oils, may be incorporated into the asphalt materials.

Currently, thermoplastic elastomers, including for example, atactic polypropylene and amorphous poly-alpha-olefins, are typically included in asphalt coatings to improve normal membrane temperature sensitivity and long term aging performance of the waterproof membranes produced with the coatings. However, while the normal membrane temperature sensitivity and long term aging performance of the membranes is improved, addition of the thermoplastic elastomers also results in an increase in the viscosity of the coating, which requires a higher temperature and more time to produce the waterproof membrane using the elastomer-containing coating. Furthermore, such elastomer-containing asphalt coatings fail to meet increased heat resistance requirements, especially in long term aging performance.

Accordingly, it is desirable to provide asphalt coatings for use in producing waterproof membranes having acceptable normal membrane temperature sensitivity and long term aging performance, but also having lower viscosity to facilitate the production process, as well as increased heat resistance without losing low temperature flexibility to further improve long term aging performance. It also is desirable to provide waterproof membranes including asphalt coatings that impart the aforesaid beneficial properties to the waterproof membrane. A method would also be welcomed for producing such asphalt coatings and waterproof membranes including same. Additional beneficial features and characteristics of the asphalt compositions will become apparent from the subsequent detailed description and examples.

### SUMMARY

An asphalt coating for roofing waterproof membranes is provided and comprises: from 30 to 88 weight percent (wt%) of asphalt; from 0.1 to 15 wt% of a low molecular weight (MW) polyethylene, wherein the low MW polyethylene has a number average molecular weight of from 500 to 15,000 Daltons, wherein the low MW polyethylene is oxidized, and wherein the low MW polyethylene has an acid number of from 10 to 40; from 1 to 30 wt% of a thermoplastic elastomer; from 5 to 48 wt% of an inorganic filler; and from 1 to 20 wt% of a softening agent, all based on the total weight of the asphalt coating.

In accordance with another exemplary embodiment, a waterproof membrane for use in roofing applications is provided and which comprises: a substrate; and an asphalt coating coated onto the substrate to form an asphalt-coated substrate. The asphalt coating comprises: from 30 to 88 weight percent (wt%) of asphalt; from 0.1 to 15 wt% of a low molecular weight (MW) polyethylene, wherein the low MW polyethylene has a number average molecular weight of from 500 to 15,000 Daltons, wherein the low MW polyethylene is oxidized, and wherein the low MW polyethylene has an acid number of from 10 to 40; from 1 to 30 wt% of a thermoplastic elastomer; from 5 to 48 wt% of an inorganic filler; and from 1 to 20 wt% of a softening agent, all based on the total weight of the asphalt coating.

In accordance with another exemplary embodiment, a method for making an asphalt coating for waterproof membranes is provided. The method comprises: heating asphalt to at least 180°C; adding a thermoplastic elastomer to the heated asphalt and mixing to form a heated asphalt-elastomer mixture; adding the low MW polyethylene into the heated asphalt-elastomer mixture and mixing to form an asphalt-elastomer-polyethylene mixture, wherein the low MW polyethylene has a number average molecular weight of from 500 to 15,000 Daltons, wherein the low MW polyethylene is oxidized, and wherein the low MW polyethylene has an acid number of from 10 to 40; adding the softening agent to the asphalt coating; and adding the inorganic filler to the asphalt-elastomer-polyethylene mixture and continuing mixing to form the asphalt coating, wherein the asphalt coating comprises from 30 to 88 weight percent of asphalt, from 0.1 to 15 weight percent of the low MW polyethylene, from 1 to 30 weight percent of a thermoplastic elastomer, from 1 to 20 weight percent of the softening and from 5 to 48 percent of the inorganic filler, all based on the total weight of the asphalt coating.

### DETAILED DESCRIPTION

The following description is merely exemplary in nature and is not intended to limit the invention or the application and uses of the invention. Furthermore, there is no intention to be bound by any theory presented in the preceding background or the following description.

The various embodiments contemplated herein relate to an asphalt coating for production of waterproof membranes, as well as the waterproof membranes produced with such coatings, and methods to make same. The asphalt coatings have properties that provide waterproof membranes with improved normal membrane temperature sensitivity and long term aging performance, as well as decreased viscosity and further improved heat resistance. More particularly, the asphalt coating comprises: from about 30 to about 88 weight percent (wt%) of asphalt; from about 0.1 to about 15 wt% of a low molecular weight (MW) polyethylene; from about 1 to about 20 wt% of a thermoplastic elastomer; from about 5 to about 48 wt% of an inorganic filler, and from about 1 to about 20 wt% of a softening agent, all based on the total weight of the asphalt coating.

Various properties of the asphalt coating are important for understanding and controlling their effect on the above-discussed performance characteristics of the coating and waterproof membranes produced with the coating. For example, a few such properties important for the asphalt coatings contemplated herein include, without limitation, heat resistance at a given temperature, low temperature flexibility, and stain index

The heat resistance is a measure of the dimensional stability of the asphalt coating at high temperatures. The heat resistance is measured based on the final product containing the asphalt coating. Dimensional stability is the ability of the membrane to retain its dimensional size and shape when subjected to high temperatures. A test for heat resistance is conducted by vertically hanging samples of the asphalt coating in a convection oven at different temperatures and observing the temperature at which any dripping of the asphalt coating occurs. The heat resistance is determined by the testing method in accordance with GB/T 328.11-2007. It is advantageous for the required heat resistance (at particular temperature) of the asphalt coating composition contemplated herein to be about 2 millimeters (mm) or less, such as for example, less than about 1 mm.

The low temperature flexibility is a measure of the ability of the asphalt coating to resist cracking at low temperatures. This characteristic is important because it is a measure of how well and for how long roofing membranes will perform. Waterproof membranes should have good low temperature flexibility, especially during cold weather conditions. The testing method to determine low temperature flexibility is in accordance with GB/T 328.14-2007. A sample of the asphalt coating is conditioned in a freezer at a constant temperature for 1 hour (±5min), and then bent over a mandrel of a particular diameter over a time period of usually less than 10 seconds. The sample is then visually observed for signs of cracking. If the sample does not exhibit any signs of cracking, testing is continued at a lower temperature until signs of cracking are visible. The temperature at which cracking occurs is the low temperature flexibility temperature. Exemplary low temperature flexibility temperatures for the asphalt coating contemplated herein is about -20 °C or less, such as about -25 °C or less.

The stain index is another measure of the asphalt coating's heat stability. A stain index test is conducted by putting samples of the asphalt coating on 5 layers of filter paper in an oven at various selected temperatures for 1 hour each, then observing the number of layers penetrated by oil from the samples at each temperature tested. The stain index is determined by the testing method in accordance with GB 18242-2008. An exemplary stain index for the asphalt coating composition contemplated herein is about 2 or less, preferably zero.

As noted above, the asphalt coating contemplated herein contains asphalt. All types of asphalt, naturally occurring, synthetically manufactured and modified, may be used in accordance with the asphalt coatings contemplated herein. Naturally occurring asphalt is inclusive of native rock asphalt, lake asphalt, and the like. Synthetically manufactured asphalt is often a byproduct of petroleum refining operations and includes air-blown (oxidated) asphalt, blended asphalt, cracked, residual or recycled asphalt, petroleum asphalt, propane asphalt, straight-run asphalt, thermal asphalt, and the like. Modified asphalt includes base asphalt (e.g., neat or unmodified asphalt that can be naturally occurring or synthetically manufactured) modified with elastomers, plastomers, or various combinations of these.

"Asphalt," as this term is used herein, is also known as bitumen, and is defined by the ASTM as a dark brown to black cementitious material in which the predominant constituents are bitumens that occur in nature or are obtained in petroleum processing. Asphalts typically contain saturates, aromatics, resins and asphaltenes.

In an exemplary embodiment, the asphalt is present in the asphalt coating in an amount of from about 30 to about 88 percent by weight (wt%), based on the total weight of the asphalt coating. It is preferred that the asphalt is present in the asphalt coating in an amount, in wt%, based on the total weight of the asphalt coating of at least about, 32, 35, 38, 40, 45, 50, 55, 60, 65, 70, 75, 80, and 85 and independently, for example, is not more than about, 86, 85, 82, 80, 78, 75, 72, 70, 68, 65, 62, 60, and 55. In an exemplary embodiment, the content of asphalt in the asphalt coating is from about 30 to about 80 wt%, or from about 30 to about 70 wt%, or from about 35 to about 65 wt%, or even from about to 35 to about 60 wt%, based on the total weight of the asphalt coating.

In another exemplary embodiment, the asphalt coating as contemplated herein includes a low MW polyethylene. "Low MW polyethylene," as this term is used herein, means a polyethylene-containing polymer, or a blend of two or more polyethylenecontaining polymers, each of which has a number average molecular weight (Mₙ) of from about 500 to about 15,000 Daltons. In one embodiment, the asphalt coating comprises from about 50 to about 100 wt%, based on the total weight of the low MW polyethylene, of one or more ethylene monomers, their derivatives, or both. The low MW polyethylene may be a homopolymer comprising only ethylene monomers, their derivatives, or both, or copolymers comprising ethylene monomers, their derivatives, or both, and other types of monomers. Furthermore, low MW polyethylenes, as this term is used herein, include but are not limited to polyethylene wax, i.e., where a wax is a substance that is solid at or near room temperature and has low viscosity when above its melting point. Moreover, suitable low MW polyethylenes have an acid number from about 10 to about 40, and a viscosity of from about 3,000 to about 20,000 centipoise (cp) at 150 °C. Additionally, the low MW polyethylenes may be oxidized.

Furthermore, the low MW polyethylenes may be functionalized. Functionalized low MW polyethylenes comprise one or more functional groups including for example, without limitation, an acid, an ester, an amine, an amide, an ether, and hydroxide. Functionalized low MW polyethylenes may be homopolymers or copolymers. Examples of suitable functionalized low MW polyethylene include, without limitation, maleated polyethylene, ethylene acrylic acid copolymers, and combinations thereof.

In an exemplary embodiment, the low MW polyethylene has an ethylene content of from about 50 to about 100 wt%, based on the total weight of the low MW polyethylene. For example, the low MW polyethylene has an ethylene content in wt%, based on the total weight of the low MW polyethylene, of at least about 55, 60, 65, 70, 75, 80, 85, 90, and 95, and independently, is not more than about 98, 95, 92, 90, 85, 80, and 75.

As already mentioned, the low MW polyethylene has a Mₙ of from about 500 to about 15,000 Daltons. In an exemplary embodiment, the low MW polyethylene has a Mₙ in Daltons of at least about 500, 1,000, 1,100, 1,500, 2,000, 3,000, 4,000, 5,000, 6,000, and 7,000, and independently, not more than about 15,000, 12,000, 10,000, 9,000, and 8,000. Where the low MW polyethylene comprises a combination of more than one type of polyethylene, the Mₙ of each type of polyethylene in the combination shall individually be within the above-stated range of about 500 to about 15,000 Daltons.

Generally, suitable low MW polyethylenes include, without limitation, polyethylene homopolymers, copolymers of ethylene or its derivatives and another monomer, functionalized derivatives of the homopolymers, functionalized derivatives of the copolymers, or combinations of unfunctionalized and functionalized low MW polyethylene. Some polyethylene Fischer-Tropsch waxes, i.e., those which satisfy the above-defined characteristics of low MW polyethylene, may also be used in the asphalt compositions contemplated and described herein.

One category of suitable low MW polyethylene includes certain Honeywell TITAN^{®} polyolefins, which include homopolymers of polyethylene and are commercially available from Honeywell International Inc., located in Morristown, New Jersey, U.S.A. More particularly, one or more of the TITAN^{®} 8594, 7437, 8570, and 8903 are suitable for use as the low MW polyethylene. Preferred Honeywell TITAN^{®} polyethylene for use as the low MW weight polyethylene include TITAN^{®} 7437, 8570, 8903, and 8594.

The low MW polyethylene is present in the asphalt coating in an amount of from about 0.1 to about 15 percent by weight (wt%) of the asphalt coating. For example, the low MW polyethylene is present in the asphalt coating in an amount, in wt%, based on the total weight of the asphalt coating formulation of at least about 0.1, 0.2, 0.5, 0.8, 1.0, 1.2, 1.5, 1.8, 2.0, 2.2, 2.5, and 3.0 and independently, is not more than about 15, 13, 12, 11, 10, 9, 8, 7, 6, 5, 4.5, 4.0, 3.5, 3.0, 2.5, 2, and 1.5. In an embodiment, the total content of low MW polyethylene in the asphalt coating is from about 0.5 to about 10 wt%, or from about 1 to about 10 wt%, or from about 1 to about 7 wt%, or from about 2 to about 7 wt%, or from about 1 to 3wt%, based on the total weight of the asphalt coating.

The asphalt coating comprises a thermoplastic elastomer in an amount of from about 1 to about 30 wt%, based on the total weight of the asphalt coating. For example, in some embodiments, the elastomer is present in the asphalt coating in an amount in wt%, based on the total weight of the asphalt coating, of at least about 2, 4, 6, 8, 9, 10, 12, and 15 and independently is not more than about 28, 25, 22, 20, 18, 16, 15, 14, 13, 12, 11, 10, and 9. In some embodiments, the thermoplastic elastomer may comprise two or more such elastomers and, in such embodiments, the total thermoplastic elastomer content of the asphalt coating is from about 10 to about 30 wt%, based on the total weight of the asphalt coating. For example, in embodiments that include two or more elastomers, the elastomers are present in the asphalt coating in a total amount in wt%, based on the total weight of the asphalt coating, of at least about 12, 14, 15, 18, and 20 and independently, is not more than about 28, 25, 22, 20, 18, and 15.

Non-limiting examples of thermoplastic elastomers suitable for use in the asphalt coating include natural or synthetic rubbers including ground tire rubber (GTR), devulcanized GTR, butyl rubber, chloroprene rubber (CR), styrene/butadiene rubber (SBR), styrene/ethylene/butadiene/styrene terpolymers (SEBS), polybutadiene, polyisoprene, ethylene/propylene/diene (EPDM) terpolymers, ethylene/n-butyl acrylate/glycidyl methacrylate terpolymers, and styrene/conjugated diene block or random copolymers, such as, for example, styrene/butadiene including styrene/butadiene/styrene copolymer (SBS), styrene/isoprene, and styrene/isoprene-butadiene block copolymer. The block copolymers may be branched or linear and may be a diblock, triblock, tetrablock or multiblock.

In an exemplary embodiment, the thermoplastic elastomer is selected from: an SBS copolymer, an SBR, a CR, GTR, devulcanized GTR, and combinations thereof. In another embodiment, the thermoplastic elastomer is selected from: an SBS copolymer, GTR, devulcanized GTR, and combinations thereof. In one embodiment, for example, the thermoplastic elastomer comprises a synthetic rubber, such as SBS or SBR, in an amount of less than about 8 wt%, and a GTR or a devulcanized GTR in an amount of from about 10 to about 22 wt%, based on the total weight of the asphalt coating.

The asphalt coating comprises the inorganic filler present in amounts of from about 5 to about 48 wt %, based on the total weight of the asphalt coating. For example, in some embodiments, the inorganic filler is present in the asphalt coating in an amount in wt%, based on the total weight of the asphalt coating, of at least about 12, 15, 20, 25, 30, 35, 40, 42, 45, and 47 and independently, is not more than about 47, 45, 40, 35, 30, 25, 20, 15, and 12. For example, in one embodiment, the asphalt coating comprises the inorganic filler present in amounts of from about 15 to about 45 wt %, based on the total weight of the asphalt coating. Furthermore, the inorganic filler may comprise two or more types of inorganic filler.

Inorganic fillers suitable for inclusion in the asphalt coatings, such as those described herein, may be any inorganic fillers, known now or in the future to persons of ordinary skill in the art, to be appropriate for inclusion in roofing products. Generally, the inorganic filler may be mineral filler. Mineral filler is typically ground stone or mineral, such as, for example, stone dust, baudisserite powder, dolomite dust, and talc, among others. In an embodiment, stone and/or mineral is ground to a particle size of about 180 µ or less.

Softening agents suitable for use in the asphalt coating s contemplated and described herein include, for example without limitation, naphthenic hydrocarbons, aliphatic hydrocarbons, aromatic hydrocarbons, and combinations thereof. The asphalt coating comprises a softening agent in a total amount of from about 1 to about 20 wt%, based on the total weight of the asphalt coating. In some embodiments, for example, the softening agent is present in the asphalt coating in a total amount in wt%, based on the total weight of the asphalt coating, of at least about 2, 3, 4, 5, 6, 7, 8, 9, and 10, and independently, is not more than about 18, 15, 13, 12, 11, 10, 9, 8, and 7. For example, in one embodiment, the asphalt coating comprises the softening agent present in amounts of from about 3 to about 8 wt %, based on the total weight of the asphalt coating.

The asphalt coating may also, optionally, comprise other additives, such as fire retardant materials, and tackifiers such as terpene resin present in an amount of from about 1 to about 15 wt %, based on the total weight of the asphalt coating. Typical fire retardants employed include calcium borate, magnesium borate, a mixture of antimony trioxide and deca-bromo-diphenyl oxide etc.

Another embodiment provides a waterproof membrane for use in roofing applications comprising: a substrate; and an asphalt coating coated onto the substrate to form an asphalt-coated substrate. Furthermore, the asphalt coating is as described hereinabove and comprises: from about 30 to about 88 weight percent (wt%) of asphalt; from about 0.1 to about 15 wt% of a low MW polyethylene; from about 1 to about 30 wt% of a thermoplastic elastomer; from about 5 to about 48 wt% of an inorganic filler; and from about 1 to about 20 wt% of a softening agent, all based on the total weight of the asphalt coating. The substrate may be any material known now or in the future to persons of ordinary skill in the art to be suitable, together with asphalt coatings, for producing waterproof membranes. Suitable substrates include, for example without limitation, fiber glass, polyester non-woven fabric, glass fiber reinforced polyester, and the like.

In an exemplary embodiment, the waterproof membrane further comprises an isolation material overlaying the asphalt-coated substrate. The isolation material is required to prevent the asphalt coated membrane from adhering to itself when it is rolled during manufacture, and then while stored and transported in that rolled condition. The isolation material may be any material known now or in the future to persons of ordinary skill in the art to be suitable for preventing the asphalt coated substrate from adhering to itself during and after production. Suitable isolation materials include, for example without limitation, fine sand, polyethylene film, mineral particles, aluminum foil, and the like.

In still another exemplary embodiment, a method for making an asphalt coating is provided. While the asphalt coating may be prepared in any way known now or in the future to persons of ordinary skill in the art, the various components are mixed with asphalt at a temperature sufficient to form a homogenous mixture. In some embodiments, for example, the method comprises heating asphalt to at least about 180°C and mixing a thermoplastic elastomer with the heated asphalt to obtain a homogeneous mixture. For example, the thermoplastic elastomer and the heated asphalt can be mixed together at a rate of at least about 1800rpm for at least about 45 minutes to obtain a homogeneous mixture. The low MW polyethylene is added into the asphalt-elastomer mixture and the mixture is blended. The blending can be performed, for example, for at least about 0.5 hour, at a rate of at least about 1800rpm. The inorganic filler is added into the asphalt-elastomer-polyethylene mixture and the blending continues thereby obtaining a homogenous mixture. The blending can continue, for example, for at least about an additional 0.5 hour at a rate of at least about 1800 rpm. In an embodiment, the thermoplastic elastomer is an SBS copolymer. In one embodiment, the low MW polyethylene is a polyethylene homopolymer, for example, a functionalized high density polyethylene. In another embodiment, the inorganic filler comprises talc or dolomite dust.

In another exemplary embodiment, the method for making the asphalt coating further comprises, after adding the thermoplastic elastomer and mixing to produce the heated asphalt-elastomer mixture and before adding the low MW polyethylene, adding a second thermoplastic elastomer to the heated asphalt-elastomer material and mixing them together. For example, the second thermoplastic elastomer can be blended with the heated asphalt-elastomer mixture for about 1.5 to about 2 hours at a rate of at least about 1800rpm. The low MW polyethylene then is added into the heated asphalt-elastomer mixture. In an embodiment, the second thermoplastic elastomer is a ground tire rubber (GTR).

### EXAMPLES

The following are examples of asphalt compositions modified with low molecular weight polyethylenes and having improved oil stain resistance and heat resistance, with each of the components set forth in weight percent. The examples are provided for illustration purposes only and are not intended to limit the various embodiments of the asphalt compositions in any way. Molecular Weight, number average, Mₙ: All molecular weight reported in these examples are number average molecular weights measured by gel permeation chromatography (GPC), which is a technique generally known in the art. For the purpose of GPC, the sample to be measured is dissolved in 1,2,4-trichlorobenzene at 140 °C at a concentration of 2.0 mg/ml. The solution (200 uL) is injected into the GPC containing two PLgel 5µm Mixed-D (300x7.5 mm) columns held at 140 °C with a flow rate of 1.0 mL/minute. The molecular weight (Mw) is determined using a calibration curve generated from a set of linear polyethylene narrow Mₙ standards
The standard test methods applied in China at the time of invention followed the GuoBiao/Tui ("Recommended National Specification"), published by the Standardization Administration of the People's Republic of China, and will henceforth be abbreviated as "GB/T" followed by the standard number and year (e.g., GB/T ####-¥¥¥¥).

### Examples 1-4

The sample asphalt coatings were each prepared by loading all the ingredients in a container in the following sequence: firstly heating asphalt to 190°C; secondly, adding the SBS to the heated asphalt and shearing them together at a rate of 2000rpm for 1hr; thirdly, adding the GTR to the heated asphalt-SBS material and shearing them together for about 1.5 to 2 hrs at a rate of 2000rpm; fourthly, adding Honeywell TITAN^{®} 8903 polyethylene into the asphalt-SBS-GTR mixture and mixing for 0.5hr @2000rpm; and lastly, adding talc into the asphalt-SBS-GTR-TITAN^{®} 8903 mixture, and continuing shearing for additional 0.5hr @ 2000rpm.

The characteristics of the asphalt used in these examples are provided in the following Table 1.

**Table 1**

| Testing item | unit | values |
|---|---|---|
| Penetration @25 °C | 0.1mm | 60 |
| Softening point | °C | 51 |
| Ductility @15°C | cm | >100 |
| Low temp, flexibility | °C | +3 |

The SBS elastomer was brand YH-792 produced by Yueyang Baling Petrochemical, located in Hunan, China, and it had the following characteristics listed in Table 2.

**Table 2**

| S/B ratio | 40/60 | structure | linear |
|---|---|---|---|
| Volatilitv (< %) | 0.70 | Total ash (< %) | 0.20 |
| Oil content (%) | 0 | Molecular Weight | 90,000 |
| Stress at 300% (>MPa) | 3.5 | Tensile strength ( >MPa ) | 24.0 |
| Elongation (> %) | 730 | Permanent deformation (< %) | 55 |
| Hardness shore (A) | 90±5 | Melt flow rate (g/10min) | 0.10-5.00 |

Honeywell TITAN^{®} 8903 is a functionalized polyethylene having the characteristics listed in Table 3 below.

**Table 3**

| Property | Unit | Value |
|---|---|---|
| Acid number | mg Koh/g | 25 |
| hardness | drum | <0.5 |
| Viscosity @150°C | cps | 4500 |
| Melting point | °C | 137 |
| Mₙ | Daltons | 4000 - 4600 |

The following Table 4 provides the particular compositions of each of sample asphalt coatings 1-4, as well as the values for the characteristics of heat resistance, low temperature flexibility, stain index, appearance and low temperature flexibility after artificial aging process.

### Testing Methods Used

The testing method for artificial weathering aging of asphalt-based waterproof membrane is accordance with GB/T 18244-2000. The sample of asphalt coating was placed in a hot air aging test box, which maintains constant temperature at about (70±1)°C, the aging time was started to count till the regulated aging time such as 168h or more. The aging sample was taken out and placed at standard temperature, (23±2)°C for 24hr, and then tested again for low temperature flexibility and its appearance noted.

The heating resistance was determined in accordance with GB/T 328.11-2007 as follows. Three samples, which are rectangular shaped and sized of (100±l)mm×(50±l)mm, were placed in the oven at desired testing temperature (90°C in this invention) for (120±2)min. After taking them out, observe the flowing, or dripping of the coating layer and measure the displacement between coating layer and substrate layer.

The low temperature flexibility was determined in accordance with GB/T 328.142007 as follows. Samples of the asphalt coating, which were (150±l)mm×(25±l)mm rectangular, were conditioned in a freezer and immersed in the refrigerated fluid. Once the samples reached the desired temperature, that temperature was maintained for 1h±5min, after which the sample was bent over a mandrel of a particular diameter over a time period of usually less than 10s. The sample was then visually observed for signs of cracking. Testing was repeated at lower and lower temperatures until cracking was observed in the sample. For each sample, the lowest temperature at which signs of cracking were visually observed was recorded as the low temperature flexibility temperature.

The stain index was determined in accordance with GB 18242-2008 as follows. Samples of the asphalt-coated membrane (sized 50x50mm) were placed between 1 kg heavy and 5 layers of filter paper in an oven, and heated to the desired temperature, then placed horizontally for about 5hr, and placed at standard testing condition (23±2)°C for Ih, after which time the number of penetrated layers of filter paper is observed and reported for each sample.

**Table 4**

| Ingredients bv weight | | | 1# | 2# | 3# | 4# | |
|---|---|---|---|---|---|---|---|
| Asphalt | | | 52.6 | 51.8 | 40.0 | 39.5 | |
| SBS(YH-792) | | | 5.3 | 5.2 | 4.0 | 4.0 | |
| GTR | | | 15.8 | 15.5 | 12.0 | 11.9 | |
| recycled engine oil | | | 5.3 | 5.2 | 4.0 | 4.0 | |
| Talc | | | 21.1 | 20.7 | 40.0 | 39.5 | |
| 8903 | | | 0.0 | 1.6 | 0.0 | 1.2 | |
| Total | | | 100 | 100 | 100 | 100 | |
| | | | | | | | |

| Performance | | unit | | | | | Target values |
|---|---|---|---|---|---|---|---|
| Heat resistance@90°C | | mm | 3 | 0 | 2.5 | 0 | <2 |
| Low temperature flexibility | | °C | -26 | -25 | -25 | -24 | <-20 |
| Stain index | | - | 1 | 0 | 1 | 0 | <2 |
| Artificial weathering aging | Appearance | - | Flow, drop | No flow, drop | Flow, drop | No flow, drop | No flow, drop |
| | Low temp, flexibility | °C | -18 | -17 | -22 | -18 | <-15 |

| | | | | | | | |
|---|---|---|---|---|---|---|---|
| Test Method Key: Heat resistance: standard test method GB/T 328.11-2007. Low temperature flexibility: standard test method GB/T 328.14-2007. Stain index: standard test method GB/T 18242-2008. | | | | | | | |

As is apparent from comparing the actual values for each measured characteristic for each of the sample asphalt coatings 1-4, asphalt coatings 2 and 4 meet the specification requirement in terms of heat resistance and low temperature flexibility character, while the heat resistance for asphalt coatings 1 and 3 (i.e., those without TITAN^{®} 8903 polyethylene) failed to meet the specification requirements. In addition, the stain index values of asphalt coatings 1 and 3 are inferior to the stain index values for asphalt coatings 2 and 4.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims and their legal equivalents.

## Claims

1. An asphalt coating for roofing waterproof membranes comprising:
from 30 to 88 weight percent (wt%) of asphalt;
from 0.1 to 15 wt% of a low molecular weight (MW) polyethylene, wherein the low MW polyethylene has a number average molecular weight of from 500 to 15,000 Daltons, wherein the low MW polyethylene is oxidized, and wherein the low MW polyethylene has an acid number of from 10 to 40;
from 1 to 30 wt% of a thermoplastic elastomer;
from 5 to 48 wt% of an inorganic filler; and
from 1 to 20 wt% of a softening agent;
all based on the total weight of the asphalt coating.

2. The asphalt coating according to Claim 1, wherein the low molecular weight (MW) polyethylene has a number average molecular weight of from 2,000 to 8,000 Daltons.

3. The asphalt coating according to Claim 1, comprising from 1 to 7 wt% of the low MW polyethylene, based on the total weight of the asphalt coating.

4. The asphalt coating according to Claim 1, comprising from 15 to 30 wt% of the thermoplastic elastomer, based on the total weight of the asphalt coating.

5. The asphalt coating according to Claim 1, wherein the thermoplastic elastomer comprises less than 8 wt% of synthetic rubber and one or more other thermoplastic elastomers, and from 10 to 12 wt% of ground tire rubber (GTR) and one or more other thermoplastic elastomers.

6. A waterproof membrane for use in roofing applications comprising:
a substrate; and
an asphalt coating coated onto the substrate to form an asphalt-coated substrate, the asphalt coating comprising:
from 30 to 88 weight percent (wt%) of asphalt;
from 0.1 to 15 wt% of a low molecular weight (MW) polyethylene, wherein
the low MW polyethylene has a number average molecular weight of from 500 to 15,000 Daltons, wherein the low MW polyethylene is oxidized, and wherein the low MW polyethylene has an acid number of from 10 to 40;
from 1 to 30 wt% of a thermoplastic elastomer;
from 5 to 48 wt% of an inorganic filler; and
from 1 to 20 wt% of a softening agent; and
all based on the total weight of the asphalt coating.

7. The waterproof membrane according to claim 6, further comprising an isolation material overlaying the asphalt-coated substrate.

8. A method for making an asphalt coating for waterproof membranes, the method comprising the steps of:
heating asphalt to at least 180°C;
adding a thermoplastic elastomer to the asphalt and mixing them together to form a heated asphalt-elastomer mixture;
adding a low molecular weight (MW) polyethylene into the heated asphalt-elastomer mixture and mixing to form an asphalt-elastomer-polyethylene mixture, wherein the low MW polyethylene has a number average molecular weight of from 500 to 15,000 Daltons, wherein the low MW polyethylene is oxidized, and wherein the low MW polyethylene has an acid number of from 10 to 40;
adding a softening agent to the asphalt coating; and
adding an inorganic filler into the asphalt-elastomer-polyethylene mixture and continuing mixing to form the asphalt coating, wherein the asphalt coating comprises from 30 to 88 weight percent of asphalt, from 0.1 to 15 weight percent of the low MW polyethylene, from 1 to 30 weight percent of the thermoplastic elastomer, from 1 to 20 weight percent of the softening agent, and from 5 to 48 weight percent of the inorganic filler, all based on a total weight of the asphalt coating.

9. The method according to claim 8, further comprising, after adding the thermoplastic elastomer and mixing to produce the heated asphalt-elastomer mixture and before adding the low MW polyethylene, adding a second thermoplastic elastomer to the heated asphalt-elastomer material and mixing.

## Patentansprüche

1. Asphaltbeschichtung für wasserdichte Dachbahnen, umfassend:
30 bis 88 Gewichtsprozent (Gew.-%) Asphalt;
0,1 bis 15 Gew.-% eines Polyethylens mit niedrigem Molekulargewicht (MW), wobei das Polyethylen mit niedrigem Molekulargewicht ein zahlenmittleres Molekulargewicht von 500 bis 15.000 Dalton aufweist, wobei das Polyethylen mit niedrigem Molekulargewicht oxidiert ist und wobei das Polyethylen mit niedrigem Molekulargewicht eine Säurezahl von 10 bis 40 aufweist;
von 1 bis 30 Gew.-% eines thermoplastischen Elastomers;
von 5 bis 48 Gew.-% eines anorganischen Füllstoffs; und
von 1 bis 20 Gew.-% eines Weichmachers;
alle basierend auf dem Gesamtgewicht der Asphaltbeschichtung.

2. Asphaltbeschichtung nach Anspruch 1, wobei das Polyethylen mit niedrigem Molekulargewicht (MW) ein zahlenmittleres Molekulargewicht von 2.000 bis 8.000 Dalton aufweist.

3. Asphaltbeschichtung nach Anspruch 1, umfassend 1 bis 7 Gew.-% des Polyethylens mit niedrigem Molekulargewicht, basierend auf dem Gesamtgewicht der Asphaltbeschichtung.

4. Asphaltbeschichtung nach Anspruch 1, umfassend 15 bis 30 Gew.-% des thermoplastischen Elastomers, basierend auf dem Gesamtgewicht der Asphaltbeschichtung.

5. Asphaltbeschichtung nach Anspruch 1, wobei das thermoplastische Elastomer weniger als 8 Gew.-% synthetischen Kautschuk und ein oder mehrere andere thermoplastische Elastomere umfasst, und 10 bis 12 Gew.-% gemahlenen Reifengummi (GTR) und ein oder mehrere andere thermoplastische Elastomere.

6. Wasserdichte Bahn zur Verwendung bei Anwendungen auf Dächern, umfassend:
ein Substrat; und
eine Asphaltbeschichtung, die auf das Substrat beschichtet wird, um ein asphaltbeschichtetes Substrat zu bilden, wobei die Asphaltbeschichtung Folgendes umfasst:
30 bis 88 Gewichtsprozent (Gew.-%) Asphalt;
0,1 bis 15 Gew.-% eines Polyethylens mit niedrigem Molekulargewicht (MW), wobei das Polyethylen mit niedrigem Molekulargewicht ein zahlenmittleres Molekulargewicht von 500 bis 15.000 Dalton aufweist, wobei das Polyethylen mit niedrigem Molekulargewicht oxidiert ist und wobei das Polyethylen mit niedrigem Molekulargewicht eine Säurezahl von 10 bis 40 aufweist;
von 1 bis 30 Gew.-% eines thermoplastischen Elastomers;
von 5 bis 48 Gew.-% eines anorganischen Füllstoffs; und
von 1 bis 20 Gew.-% eines Weichmachers; und
alle basierend auf dem Gesamtgewicht der Asphaltbeschichtung.

7. Wasserdichte Bahn nach Anspruch 6, ferner umfassend ein Isoliermaterial, das über dem mit Asphalt beschichteten Substrat liegt.

8. Verfahren zur Herstellung einer Asphaltbeschichtung für wasserdichte Bahnen, wobei das Verfahren die folgenden Schritte umfasst:
Erwärmen des Asphalts auf mindestens 180 °C;
Zugeben eines thermoplastischen Elastomers zu dem Asphalt und Zusammenmischen, um eine erwärmte Asphalt-Elastomer-Mischung zu bilden;
Zugeben eines Polyethylens mit niedrigem Molekulargewicht (MW) zu der erwärmten Asphalt-Elastomer-Mischung und Mischen, um eine Asphalt-Elastomer-Polyethylen-Mischung zu bilden, wobei das Polyethylen mit niedrigem Molekulargewicht ein zahlenmittleres Molekulargewicht von 500 bis 15.000 Dalton aufweist, wobei das Polyethylen mit niedrigem Molekulargewicht oxidiert ist und wobei das Polyethylen mit niedrigem Molekulargewicht eine Säurezahl von 10 bis 40 aufweist;
Zugeben eines Weichmachers zu der Asphaltbeschichtung; und
Zugeben eines anorganischen Füllstoffs zu der Asphalt-Elastomer-Polyethylen-Mischung und weiteres Mischen, um die Asphaltbeschichtung zu bilden, wobei die Asphaltbeschichtung 30 bis 88 Gew.-% Asphalt, 0,1 bis 15 Gew.-% des Polyethylens mit niedrigem Molekulargewicht, 1 bis 30 Gew.-% des thermoplastischen Elastomers, 1 bis 20 Gew.-% des Weichmachers und 5 bis 48 Gew.-% des anorganischen Füllstoffs umfasst, alles basierend auf einem Gesamtgewicht der Asphaltbeschichtung.

9. Verfahren nach Anspruch 8, ferner umfassend, nach Zugeben des thermoplastischen Elastomers und Mischen, um die erwärmte Asphalt-Elastomer-Mischung herzustellen, und vor Zugeben des Polyethylens mit niedrigem Molekulargewicht, Zugeben eines zweiten thermoplastischen Elastomers zu dem erwärmten Asphalt-Elastomer-Material und Mischen.

## Revendications

1. Revêtement d'asphalte pour membranes de toiture étanches à l'eau comprenant :
de 30 à 88 pour cent en poids (% en poids) d'asphalte ;
de 0,1 à 15 % en poids d'un polyéthylène de faible poids moléculaire (PM), le polyéthylène de faible PM ayant une masse moléculaire moyenne en nombre de 500 à 15 000 daltons, le polyéthylène de faible PM étant oxydé, et le polyéthylène de faible PM ayant un indice d'acide de 10 à 40 ;
de 1 à 30 % en poids d'un élastomère thermoplastique ;
de 5 à 48 % en poids d'une charge inorganique ; et
de 1 à 20 % en poids d'un amollissant ;
le tout basé sur le poids total du revêtement d'asphalte.

2. Revêtement d'asphalte selon la revendication 1, dans lequel le polyéthylène de faible poids moléculaire (PM) a une masse moléculaire moyenne en nombre de 2 000 à 8 000 daltons.

3. Revêtement d'asphalte selon la revendication 1, comprenant de 1 à 7 % en poids de polyéthylène de faible PM, sur la base du poids total du revêtement d'asphalte.

4. Revêtement d'asphalte selon la revendication 1, comprenant de 15 à 30 % en poids d'élastomère thermoplastique, sur la base du poids total du revêtement d'asphalte.

5. Revêtement d'asphalte selon la revendication 1, dans lequel l'élastomère thermoplastique comprend moins de 8 % en poids de caoutchouc synthétique et un ou plusieurs autres élastomères thermoplastiques, et de 10 à 12 % en poids de caoutchouc de pneu broyé (GTR) et un ou plusieurs autres élastomères thermoplastiques.

6. Membrane étanche à l'eau destinée à être utilisée dans des applications de toiture comprenant :
un substrat ; et
un revêtement d'asphalte appliqué sur le substrat pour former un substrat revêtu d'asphalte,
le revêtement d'asphalte comprenant :
de 30 à 88 pour cent en poids (% en poids) d'asphalte ;
de 0,1 à 15 % en poids d'un polyéthylène de faible poids moléculaire (PM), le polyéthylène de faible PM ayant une masse moléculaire moyenne en nombre de 500 à 15 000 daltons, le polyéthylène de faible PM étant oxydé, et le polyéthylène de faible PM ayant un indice d'acide de 10 à 40 ;
de 1 à 30 % en poids d'un élastomère thermoplastique ;
de 5 à 48 % en poids d'une charge inorganique ; et
de 1 à 20 % en poids d'un amollissant ; et
le tout basé sur le poids total du revêtement d'asphalte.

7. Membrane étanche à l'eau selon la revendication 6, comprenant en outre un matériau isolant recouvrant le substrat revêtu d'asphalte.

8. Procédé de fabrication d'un revêtement d'asphalte pour des membranes étanches à l'eau, le procédé comprenant les étapes de :
chauffage de l'asphalte à au moins 180°C ;
ajout d'un élastomère thermoplastique à l'asphalte et leur mélange pour former un mélange asphalte-élastomère chauffé ;
ajout d'un polyéthylène de faible poids moléculaire (PM) au mélange asphalte-élastomère chauffé et de mélange pour former un mélange asphalte-élastomère-polyéthylène, le polyéthylène de faible PM ayant une masse moléculaire moyenne en nombre de 500 à 15 000 daltons, le polyéthylène de faible PM étant oxydé, et le polyéthylène de faible PM ayant un indice d'acide de 10 à 40 ;
ajout d'un amollissant au revêtement d'asphalte ; et
ajout d'une charge inorganique au mélange asphalte-élastomère-polyéthylène et poursuite du mélange pour former le revêtement d'asphalte, le revêtement d'asphalte comprenant de 30 à 88 pour cent en poids d'asphalte, de 0,1 à 15 pour cent en poids de polyéthylène de faible PM, de 1 à 30 pour cent en poids de l'élastomère thermoplastique, de 1 à 20 pour cent en poids de l'amollissant et de 5 à 48 pour cent en poids de la charge inorganique, le tout sur la base du poids total du revêtement d'asphalte.

9. Procédé selon la revendication 8, consistant en outre, après avoir ajouté l'élastomère thermoplastique et avoir mélangé pour produire le mélange asphalte-élastomère chauffé et avant d'ajouter le polyéthylène de faible PM, à ajouter un second élastomère thermoplastique au matériau asphalte-élastomère chauffé et à mélanger.
